# EUROPEAN PATENT APPLICATION

(11) **EP 2 809 042 A1**
(43) Date of publication of application: **03.12.2014**
(21) Application number: 13382199.1
(22) Date of filing: 29.05.2013
(51) Int. Cl.: H04L 29/06

(54) **Method for authenticate a user associated to a user agent implemented over SIP protocol**

(71) Applicant: Telefonica Digital España, S.L.U., 28013 Madrid (ES)
(72) Inventor: Neystadt, John, 28013 Madrid (ES); Artuñedo Guillén, David, 28013 Madrid (ES); Hoffman, Doron, 28013 Madrid (ES)
(74) Representative: Carpintero Lopez, Francisco

(57) **Abstract**

Present invention refers to a method for authenticating a user associated to a user agent/client implemented over SIP protocol, using OAuth tokens obtained from a OAuth security token service (STS) in which the user is recognized. The method is characterized by including a OAuth token in a SIP REGISTER message; sending the SIP REGISTER message to a SIP proxy; extracting the OAuth token from the SIP REGISTER message; sending a OAuth request including the OAuth token to an OAuth server of the STS to be validated; answering a HTTP response code to the SIP proxy with an extended OAuth information including an identification of the user; the SIP proxy verifying the identification received; and finally registering the user if the verifying and the HTTP response code received from STS is successful.

## Description

### TECHNICAL FIELD OF THE INVENTION

Present invention generally relates to security and verification of identities and more specifically to the authentication of a user associated to a user agent , implemented over SIP protocol, as VoIP applications.

### BACKGROUND OF THE INVENTION

With the increasing use of distributed web services and cloud computing, third-party applications require access to server-hosted resources. Most of these resources are usually protected and require explicit user authorization, after successful user authentication using the resource owner's credentials (typically a username and password). In the traditional client-server authentication model, a client accessing a protected resource on a server presents the resource owner's credentials in order to authenticate and gain access.

The problem is that, in order for these applications to access user data on other sites, they ask for usernames and/or passwords. This is requiring not only exposing user passwords to someone else -often the same passwords used for online banking and other sites- it also provides these applications with unlimited access to do as they wish, so that they can do anything, including changing the passwords and lock users out.

**OAuth** protocol is an open standard for authorization. It offers a simple way to publish and interact with protected data providing a method for clients to access server resources on behalf of a resource owner (such as a different client or an end-user). It also provides a process for end-users to authorize third-party access to their server resources without sharing their credentials (typically, a username and password pair), using user-agent redirections.
IETF RFC 6749 specifies OAuth 2.0 authorization framework, which enables a third-party application to obtain limited access to an HTTP service, either on behalf of a resource owner by orchestrating an approval interaction between the resource owner and the HTTP service, or by allowing the third-party application to obtain access on its own behalf.
IETF RFC 6750 specifies how to use bearer tokens in HTTP requests to access OAuth 2.0 protected resources. Any party in possession of a bearer token (a "bearer") can use it to get access to the associated resources (without demonstrating possession of a cryptographic key). To prevent misuse, bearer tokens need to be protected from disclosure in storage and in transport.

**Session Initiation Protocol (SIP)** is a signalling protocol widely used for controlling communication sessions such as voice and video calls over Internet Protocol (IP). The protocol can be used for creating, modifying and terminating two-party (unicast) or multiparty (multicast) sessions. Sessions may consist of one or several media streams. Other SIP applications include video conferencing, streaming multimedia distribution, instant messaging, presence information, file transfer and online games. SIP is an application layer protocol designed to be independent of the underlying transport layer; it can run on Transmission Control Protocol (TCP), User Datagram Protocol (UDP), or Stream Control Transmission Protocol (SCTP). It is a text-based protocol, incorporating many elements of the Hypertext Transfer Protocol (HTTP) and the Simple Mail Transfer Protocol (SMTP).
SIP provides a stateless, challenge-based mechanism for authentication that is based on authentication in HTTP. Any time that a proxy server or UA receives a request, it may challenge the initiator of the request to provide assurance of its identity. Once the originator has been identified, the recipient of the request should ascertain whether or not this user is authorized to make the request in question.

The commonly used "Digest" authentication mechanism only provides message authentication and replay protection, without message integrity or confidentiality. Nowadays, protective measures above and beyond those provided by Digest need to be taken to prevent active attackers from modifying SIP requests and responses. Furthermore, due to its weak security, the usage of "Basic" authentication has been deprecated. Servers must not accept credentials using the "Basic" authorization scheme, and servers also must not challenge with "Basic". The SIP scheme usage of "Digest" authentication is almost completely identical to that for HTTP. In modern Internet applications, OAuth protocol including BEARER method to carry Oauth token from client to HTTP server, is gaining popularity. However VoIP applications implemented via SIP are limited to DIGEST authentication scheme specified in original SIP RFC 3261. SIP DIGEST Authentication is built on MD5 hash, which nowadays is considered insecure.

Some previous work has been done on "Evaluating OAUTH's suitability for SIP authentication", specifically on the access of SIP resources, the resource protected by OAUTH is the resource owner's SIP account and its associated data. It would be also possible to use SIP as a way to obtain temporary OAUTH credentials and to authenticate a resource owner. Indeed, some of the use cases described are based in OAUTH authentication between client/ user agent and server and then the client/user agent sends HTTP requests including a OAUTH token that are translated into SIP requests by the server. So basically, the server is both OAUTH server and HTTP to SIP Gateway. However, according to other use cases the client/user agent gets the OAUTH token and sends a SIP request to the Server. The server then needs to validate the OAUTH token and the SIP request compliance to policy. Thus, the use cases described define an architecture where both OAUTH and SIP requests are sent to the OAUTH server. The server validates the OAUTH requests and, for the SIP requests, the OAUTH token is extracted, validated and then, the SIP request is forwarded to the SIP server.

These approaches are more robust than the commonly used "Digest" authentication, but there is still room for improvement. The user experience and security issues demand an update to be adapted to the current requirements.

### SUMMARY OF THE INVENTION

Present invention solves the aforementioned problems of security and user experience by providing a method for authentication of a user associated to a user agent. This invention describes how to modify SIP user agent and SIP Proxies to enable user agents to use OAuth tokens obtained from a OAuth Security Token Service (STS), enabling better security (dispensing with MD5) and single-sign on experience (by delegating authentication to external Oauth authentication server) for users of VoiP applications.

More specifically, it is presented a method for authenticating a user, associated to a user agent implemented over SIP protocol, using OAuth tokens obtained from a OAuth security token service (STS) in which the user is registered, the method is characterized by comprising the steps of:
a) the user agent, associated to a user terminal, including a OAuth token in a SIP REGISTER message;
b) the user agent sending the SIP REGISTER message to a SIP proxy;
c) the SIP proxy extracting the OAuth token from the SIP REGISTER message;
d) the SIP proxy sending a OAuth request including the OAuth token to an OAuth server of the STS to be validated;
e) the OAuth server answering a HTTP response code to the SIP proxy with an extended OAuth information including at least one SIP uri message as identification of the user;
f) the SIP proxy matching the at least one SIP uri received against a uri field of the SIP REGISTER message;
g) the SIP proxy registering the user if the matching and the HTTP response code of the OAuth server are successful, being the user authenticated.

The HTTP response of the OAuth server may reflect different conditions. Besides the case of success, there are some other options as an HTTP error message. In this case, the invention may comprise sending a message to the user agent to inform the user agent that the authentication has failed. Optionally, the invention may comprise in one of its embodiments the step of mapping the HTTP response to a SIP code and send said SIP code to the user agent.

The matching of step f) may also be not successful and, in one embodiment of the invention it is comprised sending an error SIP message to the user agent.

According to one embodiment of the invention, the user agent may include a specific header in the authorization field of the SIP REGISTER message to be easily recognized by the SIP proxy. The specific header in one of the embodiments of the invention defines a bearer token to be used according to a BEARER method.

The OAuth token may be validated using a client certificate, user name/password or any other authentication scheme.

Once the user has been authenticated, the user may access to a protected content by means of the user agent without sharing any identification or user credentials.

The user agent associated to the user may be a VoIP application.

In some embodiments of the invention, the version of the OAuth protocol used is OAuth 2.0.

The user terminal, in one embodiment of the invention is a smartphone, a tablet or any kind of mobile device.

Another aspect of the invention refers to a system for authenticating a user, associated to a user agent implemented over SIP protocol, using OAuth tokens obtained from a OAuth security token service (STS) in which the user is registered, the system is characterized by comprising:
- a user terminal configured for including a OAuth token in a SIP REGISTER message and sending said SIP REGISTER message to a SIP proxy.
- a SIP proxy configured for:
   ○ extracting the OAuth token from the SIP REGISTER message;
   ○ sending a OAuth request including the OAuth token to an OAuth server of the STS to be validated;
   ○ matching at least one SIP uri received from the OAuth server against a uri field of the SIP REGISTER message;
   ○ registering the user if the matching and a HTTP response code of the OAuth server are successful;
- a OAuth server configured for answering a HTTP response code to the SIP proxy with an extended OAuth information including at least one SIP uri message as identification of the user;

A last aspect of the invention refers to a computer program product comprising computer program code adapted to perform the method of the invention, when said program code is executed on a computer, a digital signal processor, a field-programmable gate array, an application-specific integrated circuit, a micro-processor, a micro-controller, or any other form of programmable hardware.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
**Figure 1****.-** shows a diagram of one embodiment of OAuth token authentication in SIP of the present invention.
**Figure 2****.-** shows a table mapping STS HTTP codes to SIP proxy codes according to one particular embodiment of the invention.
**Figure 3****.-** shows a table providing backwards compatibility for existing SIP user agent s that only support SIP DIGEST method a way to interoperate with new SIP server implementation supporting BEARER.
**Figure 4****.-** shows an illustrative example of positive and negative authentication flows between user agent, SIP proxy and OAuth authentication server of the STS.

### DETAILED DESCRIPTION OF THE INVENTION

The invention describes a process for, in general terms, authenticate a user associated to a user agent implemented over SIP protocol. It is proposed how to modify SIP user agent s and SIP Proxies to enable user agent s to use OAuth tokens obtained from a OAuth Security Token Service (STS), enabling better security (dispensing with MD5) and single-sign on experience (by delegating authentication to external Oauth authentication server) for users of VoiP applications for example.

A **Security Token Service (STS)** is a software based identity provider responsible for issuing security tokens, especially authentication tokens. In a typical usage scenario, a user agent requests access to a sip proxy, often called a relying party. Instead of the sip relay application authenticating the user agent, the user agent is requested to provide an authentication token, obtained previously from an STS. The STS authenticates the user agent and issues a security token. Finally, the user agent registers with the SIP proxy, presenting the security token. The SIP proxy verifies that the token is valid and that the requested registration identity matches the contents of the token, and then makes authorization decisions accordingly.

A **user agent** is acting on behalf of the user. For example, in the Session Initiation Protocol (SIP), the term user agent refers to both end points of a communication session and, in some embodiments, the user agent acts as a client in a network protocol used in communications within client-server. Taking this into account, along this description the terms "client" and "user agent" would be exchanged in some contexts.

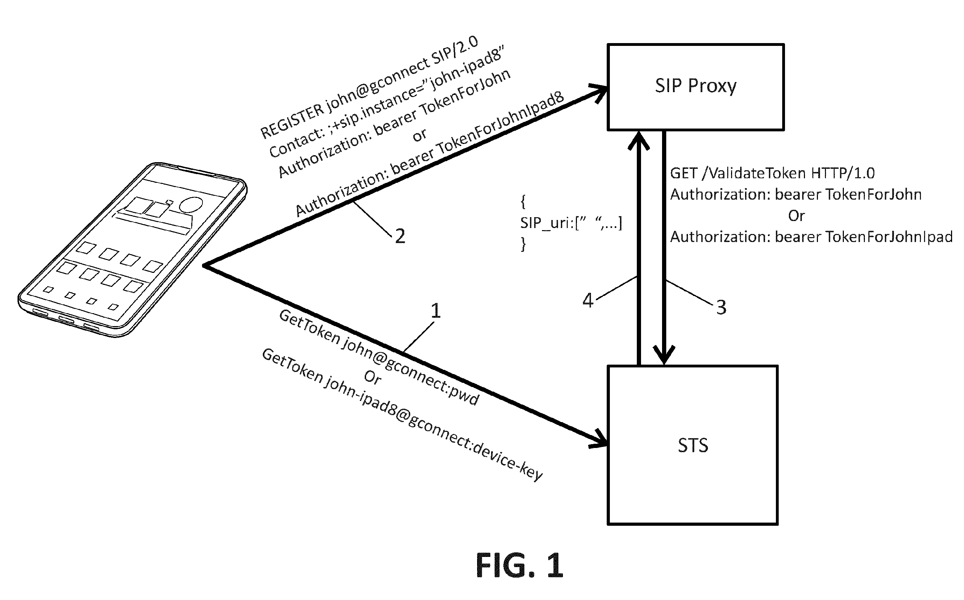

According to a particular embodiment of the invention reflected in figure 1, it is described below a normal flow in a typical scenario, where a user by means of a user agent associated to his user terminal, for example a VoIP application, logins (1) into an OAuth 2.0 compatible STS, exposed by a web service, such as Facebook, Linkedln or a VoIP service provider. The STS authenticates the user credentials using an authentication mean as a client certificate, user name/password, or any other authentication scheme supported by it and then it returns an OAuth authorization token string.

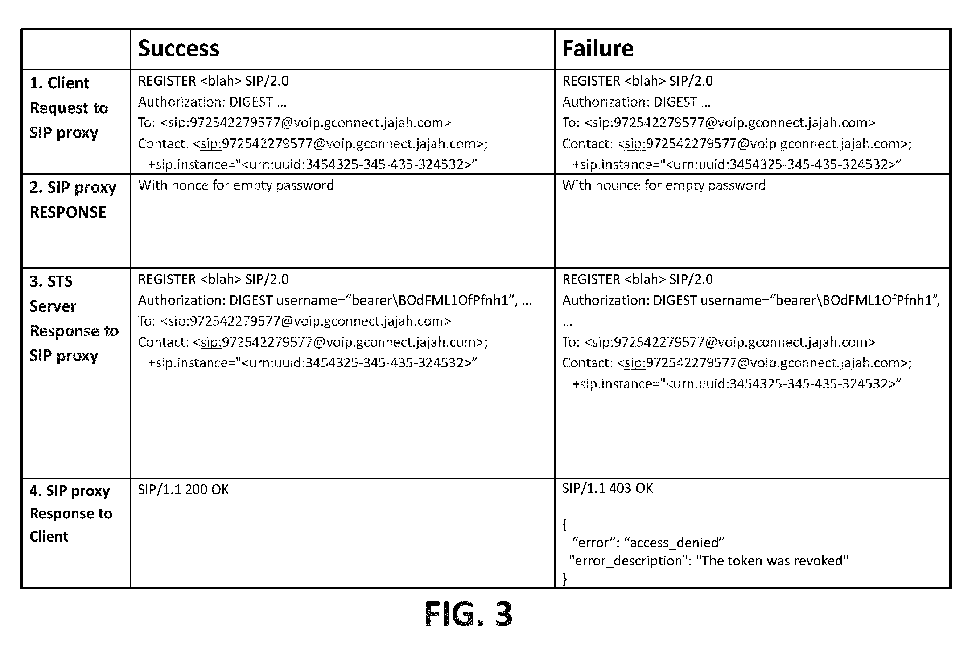

As a continuation of the process, the VoIP application contacts the SIP Proxy and sends (2) the OAuth token in a SIP REGISTER message. As opposed to DIGEST authentication method, the SIP user agent (voip application in this case) uses a specific BEARER method in Authorization: header, sent with SIP REGISTER. The BEARER method for HTTP is broadly described in RFC 6760. For SIP a similar approach is used as described in figure 3, where success cases and failure cases are treated independently depending on the kind of request/ response.

The SIP Proxy needs to perform some authorization actions to confirm that this token is valid and belongs to the user who is attempting a registration:
- SIP Proxy issues ( 3) an HTTP request to a confirmable url of the STS Service passing it the Oauth token received from the SIP user agent, either according to RFC 6760 by passing the token in Authorization: BEARER http header or via a different method.
- The STS parses the token and confirms its validity, responding with an extended OAuth information, including token expiration and also returning ( 4) one or more sip uris, which can be done for instance in sip_uri json array, or via any other method.
- The SIP Proxy verifies that the token was validated successfully comparing that the fields "to:" and/or "Request-URI" of the SIP REGISTER request belongs to the user by verifying they were listed in a sip_uri list returned by the STS.

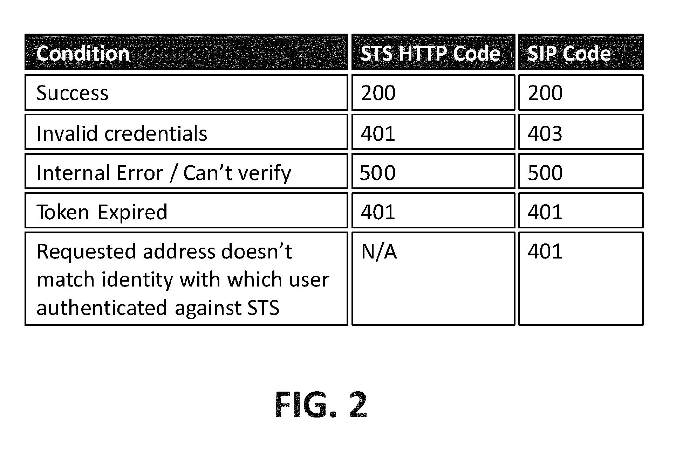

In this particular embodiment, the SIP Proxy is in charge of mapping STS HTTP response codes to SIP response code. According to the different conditions of the responses the codes will change as shown in figure 2:
- If the STS returns a successful response (HTTP 200 OK), the SIP Proxy establishes the registration and returns a SIP 200 to the user agent confirming the registration. But, even if the STS has returned a successful response, the SIP Proxy will return an error (SIP 401 for example) in the case of the "Request-uri" field or the "To:" fields do not match the identity with which user authenticated against STS, and does not appear in the sip_url list.
- If the STS returns an HTTP error, the SIP Proxy maps this error to SIP response, fails SIP registration and returns the error to the SIP user agent. The error may be produced by invalid credentials, an internal error/cannot verify or a token expired for example.

In another variant of this embodiment the STS returns an information on the user identity that is converted to a sip uri by sip relay using a certain predefined logic.

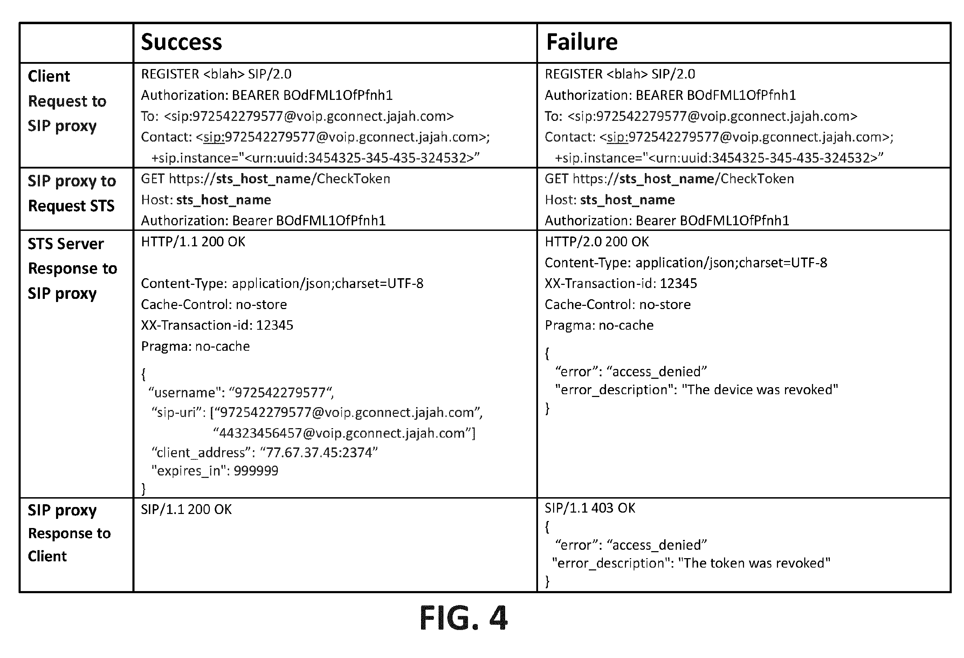

Figure 4 describes the flow proposed for requests and responses using OAuth and a BEARER method. The SIP proxy can identify special requests sent by SIP user agents without any modification, which solves a transition period while SIP OAuth support is implemented in SIP clients. For this purpose, the SIP proxy is able to use OAuth tokens via legacy SIP DIGEST authentication method. To differentiate between regular username and OAuth token, it is used a prefixed, for example "bearer" in this embodiment, or via some other identification.

In order to emphasize differences with the prior art, basically the closest processes to one of the embodiments of the present invention are characterized by, once a client has sent a SIP request including an OAuth token, the OAuth server extract the token and validate it, then it is sent a SIP request to the SIP proxy, which finally gets a validated SIP request, while in said embodiment of the present invention the SIP proxy is the one who extracts the token, then the SIP proxy sends an OAuth request to the OAuth server and finally, if an OK is received, the SIP request is validated. Thus, the security is considerably improved, as MD5 hash is not needed anymore, and it is offered a single-sign on experience by delegating authentication to external OAuth authentication server.

The SIP proxy mentioned along the whole description is interchangeably by the term "SIP server".

## Claims

1. Method for authenticating a user associated to a user agent implemented over SIP protocol, using OAuth tokens obtained from a OAuth security token service (STS) in which the user is registered, the method is **characterized by** comprising the steps of:
a) the user agent associated to a user terminal, including a OAuth token in a SIP REGISTER message;
b) the user agent sending the SIP REGISTER message to a SIP proxy;
c) the SIP proxy extracting the OAuth token from the SIP REGISTER message;
d) the SIP proxy sending a OAuth request including the OAuth token to an OAuth server of the STS to be validated;
e) the OAuth server answering a HTTP response code to the SIP proxy with an extended OAuth information including at least one SIP uri message as identification of the user;
f) the SIP proxy matching the at least one SIP uri received against a uri field of the SIP REGISTER message;
g) the SIP proxy registering the user if the matching and the HTTP response code of the OAuth server are successful, being the user authenticated.

2. Method according to claim 1 wherein the HTTP response is an HTTP error message, further comprising sending a message to the user agent to inform the user agent that the authentication has failed.

3. Method according to any one of previous claims further comprising the step of mapping the HTTP response to a SIP code and send said SIP code to the user agent.

4. Method according to claim 1 wherein the matching is not successful further comprising sending an error SIP message to the user agent.

5. Method according to any one of the previous claims further comprising the user agent including a specific header in the authorization field of the SIP REGISTER message to be recognized by the SIP proxy.

6. Method according to claim 5 wherein the specific header defines a bearer token to be used according to a BEARER method.

7. Method according to any one of previous claims wherein the validation of OAuth token comprises using a client certificate, user name/password or any other authentication scheme.

8. Method according to any one of the previous claims wherein the version of the OAuth is OAuth 2.0.

9. Method according to any one of the previous claims wherein the client is a VoIP application.

10. Method according to any one of the previous claims wherein once the user has been authenticated, further comprising the user accessing to a protected content without sharing any identification.

11. Method according to any one of the previous claims wherein the user terminal is a mobile phone.

12. System for authenticating a user associated to a user agent implemented over SIP protocol, using OAuth tokens obtained from a OAuth security token service (STS) in which the user is registered, the system is **characterized by** comprising:
- a user terminal configured for including a OAuth token in a SIP REGISTER message and sending said SIP REGISTER message to a SIP proxy.
- a SIP proxy configured for:
○ extracting the OAuth token from the SIP REGISTER message;
○ sending a OAuth request including the OAuth token to an OAuth server of the STS to be validated;
○ matching at least one SIP uri received from the OAuth server against a uri field of the SIP REGISTER message;
○ registering the user if the matching and a HTTP response code of the OAuth server are successful;
- a OAuth server configured for answering a HTTP response code to the SIP proxy with an extended OAuth information including at least one SIP uri message as identification of the user;

13. A computer program product comprising computer program code adapted to perform the method according to any of the claims 1-11 when said program code is executed on a computer, a digital signal processor, a field-programmable gate array, an application-specific integrated circuit, a micro-processor, a micro-controller, or any other form of programmable hardware.
